# EUROPEAN PATENT APPLICATION

(11) **EP 0 574 371 A1**
(43) Date of publication of application: **15.12.1993**
(21) Application number: 93870093.7
(22) Date of filing: 02.06.1993
(51) Int. Cl.: F16L 11/127, F16L 11/118

(54) **Flexible hose**

(30) Priority: 04.06.1992 BE 9200513
(71) Applicant: PLASTIFLEX EUROPE N.V., B-2200 Herentals (BE)
(72) Inventor: Diels, Domin, B-2275 Gierle (BE)
(74) Representative: Pieraerts, Jacques

(57) **Abstract**

The invention relates to a flexible hose, the wall of which shows either or not spirally windings which form on the outer side of the hose either or not spirally grooves, characterized in that at least one auxiliary tube (2, 7, 9, 11) is connected along the inner wall of the flexible hose (1) to this inner wall.

## Description

This invention relates to a flexible hose, the wall of which shows either or not spirally windings which form on the outer side of the hose either or not spirally grooves.

With the words "either or not spirally windings" there is meant that the wall of the hose can be formed by a spirally wound profile or by the technique of the so-called "blow molding". In the latter case, a relief is formed which results in mutually parallel projections and grooves.

Such flexible hoses are usually destined to equip vacuum cleaners. They can be found also in respirators and similar equipments for supplying oxygen or anaesthetics to patients.

It has already been proposed to provide such flexible hoses with an auxiliary tube, either for passing an electrical wiring, or for supplying a fluid.

Examples of such flexible hoses are described in the following patents: US-A-4,132,576 - FR-A-2 260 739 - FR-A-2 309 190 - EP-0 117 996 and DE-B-2 401 037.

According to these patents, the auxiliary tube is applied along the outer side of the hose, which can be considered as a very disadvantageous solution since the hose becomes then stiffer and loses a considerable, usually not tolerable, percentage of its flexibility or pliability. It has also been proposed to guide an auxiliary tube within the hose, but this is again not an ideal solution because this free hanging tube may prevent the good flowing through of all kinds of waste particles.

Examples of such flexible hoses wherein an auxiliary tube is provided within the hose can be found in the following documents: US-A-4,517,404; AU-49 171/72 and FR-2 379 745.

In US patent no. 4,517,404, the auxiliary tube is disposed freely in the hose resulting in the hereabove indicated drawbacks. In patent AU-49 171/72, the auxiliary tube is an integral part of the hose whereby the suppleness or flexibility of the hose is extremely reduced. Such a combination is, moreover, not applicable to a helicoidally wound hose.

In French patent no. 2 379 745, the inner small tube, which comprises in fact an electrical conductor, forms a spirally wound reinforcement of the flexible hose which also results in a reinforcement or a reduction of the flexibility of the hose.

The invention has now as object to present a flexible hose of the hereabove cited type which does not show the different drawbacks of the hitherto known hoses, which can be manufactured moreover in a very simple way and which maintains integrally the desired pliability and flexibility.

In order to enable this according to the invention, at least one auxiliary tube is connected along the inner wall of the flexible hose to this inner wall.

According to a possible embodiment, aforesaid auxiliary tube is glued onto the inner wall of said hose.

According to another possible embodiment, aforesaid auxiliary tube is welded onto the inner wall of said hose.

Other details and advantages of the invention will become apparent from the following description of a flexible hose according to the invention. This description is only given by way of example and does not limit the invention. The reference numerals relate to the figures annexed hereto.

Figure 1 shows a partially sectional and partially side-elevational view of a hose provided with an external auxiliary tube.

Figure 2 shows the same hose according to a longitudinal section and shown in convexly bent state.

Figure 3 shows still the same hose in concavely bent state.

Figure 4 shows the hose according to the invention in a position which corresponds to the position from figure 1.

Figure 5 shows the hose according to the invention in a position which corresponds to the position from figure 2.

Figure 6 shows the hose according to the invention in a position which corresponds to the position from figure 3.

Figure 7 shows, on an extremely enlarged scale, a detail of the wall of the hose.

Figure 8 shows, on the same scale, according to a section, a portion of a convexly bent hose with external auxiliary tube.

Figure 9 shows, still on the same scale, according to a section, a portion of a convexly bent hose with internal auxiliary tube.

Figures 10 and 11 show, according to a cross-section, two possible variants of the invention.

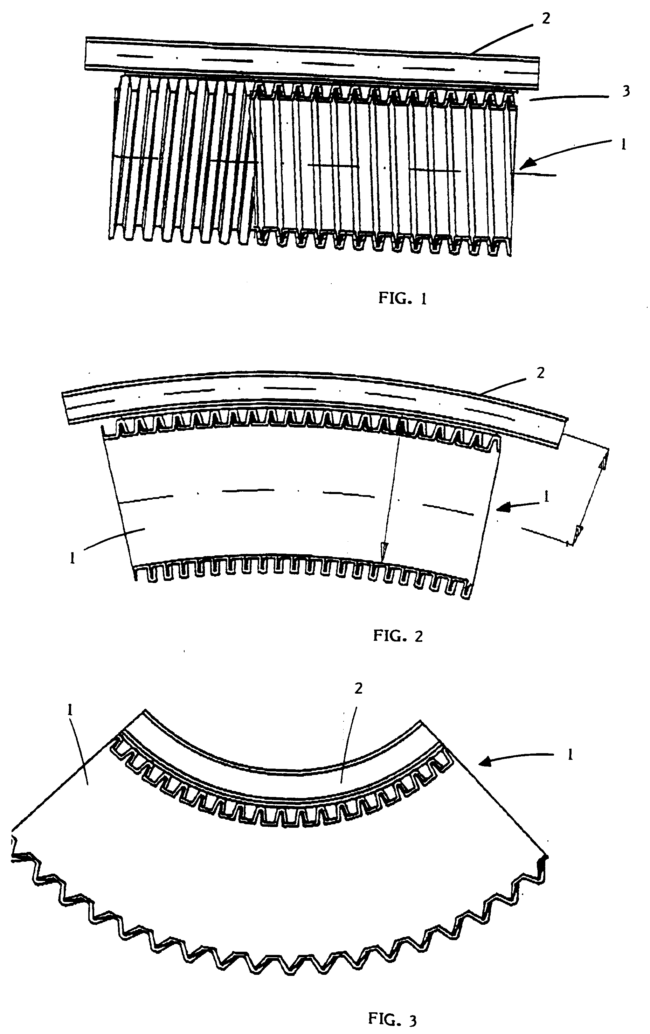

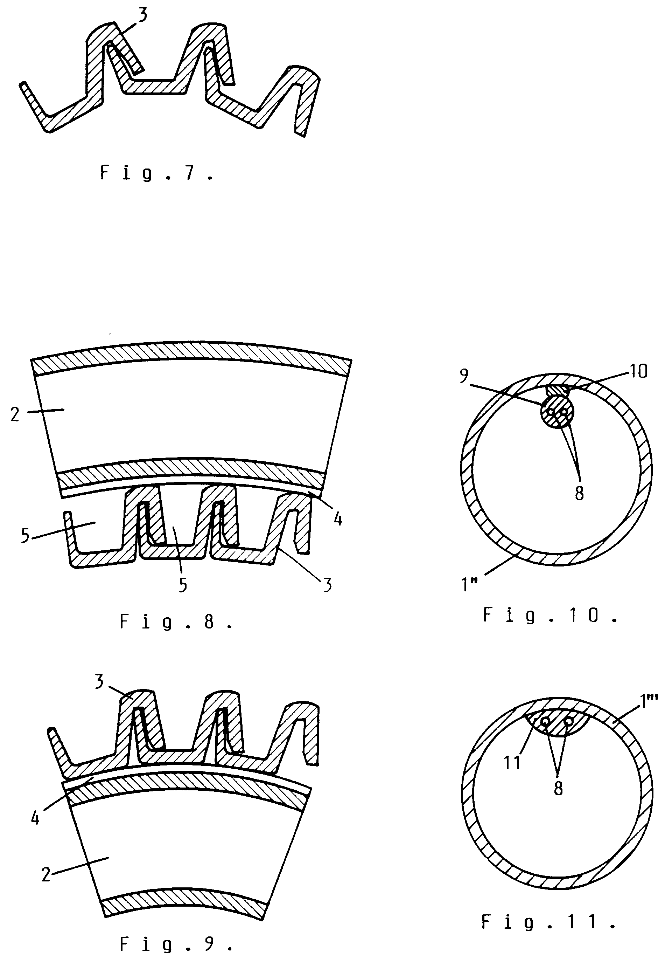

The hose represented by figures 1 to 3 is formed in the usual way by spirally winding and welding a profile, the cross section of which can be recognized from figures 7 to 8.

It is clear that besides this conventional and usually applied method for manufacturing flexible hoses of the intended type, it is also possible to manufacture flexible hoses by making use of the so-called "blow mold" technique. The hereby formed undulations seen in a transverse section may run then also spirally or may extend exclusively into mutually parallel planes. The invention is also clearly intended for such hoses and technically equivalent hoses which comprise in a longitudinal section undulations as they appear clearly from the different figures.

The hoses of the hereabove described type are applicable in vacuum cleaners and analogous apparatus involving the maintenance of an important air circulation, wherein dust particles are present, axially through the hose. They are also applicable in the medical field for supplying air, oxygen or anaesthetics and this as well for surgical purposes as in resuscitation devices.

If it is desired now, in addition to allowing a fluid flow through the hose, to supply also another fluid or to provide the hose with an electrical wiring, then it has already been proposed to provide the hose 1 externally with an auxiliary tube 2. This auxiliary tube 2 is then glued or welded on the outer wall formed along the outer circumference of the undulations 3 by spirally winding a profile as already described earlier and as clarified by the figures 1 to 3. Hoses which were obtained by the so-called "blow mold" method, to which allusion has already been made earlier, can be provided also in the same way with an externally glued or welded auxiliary tube 2. The drawback of such a structure, besides the fact that the wall of this external auxiliary tube 2, when use is made of the device, usually a vacuum cleaner, can be damaged, is the high stiffness which arises upon such a combination of hose and auxiliary tube.

The stiffness which is imposed to the hose 1 due to the external joint of an auxiliary tube 2 can be noticed especially upon bending the hose 1 convexly as shown in figures 2 and 8.

Referring in particular to figure 8 where the auxiliary tube 2 is glued along the outer surface of the undulations 3 (the glue layer is indicated by reference 4) it will immediately be noticed that the possible extreme curvature radius of the hose 1 remains too large because the presence on the outer wall of the hose 1 (here solely represented by the undulations 3) will reduce the elasticity or pliability of the hose to a considerable extend. In respect of this embodiment, it is further to be remarked that during the gluing operation, the recesses 5 between the different undulations 3 may receive a certain amount of glue which will increase then the stiffness of such a hose still further.

An opposite situation arises when the auxiliary tube 2 is applied internally into the hose, i.e. internally glued or welded to the inner surface of the undulations 3 (figure 9).

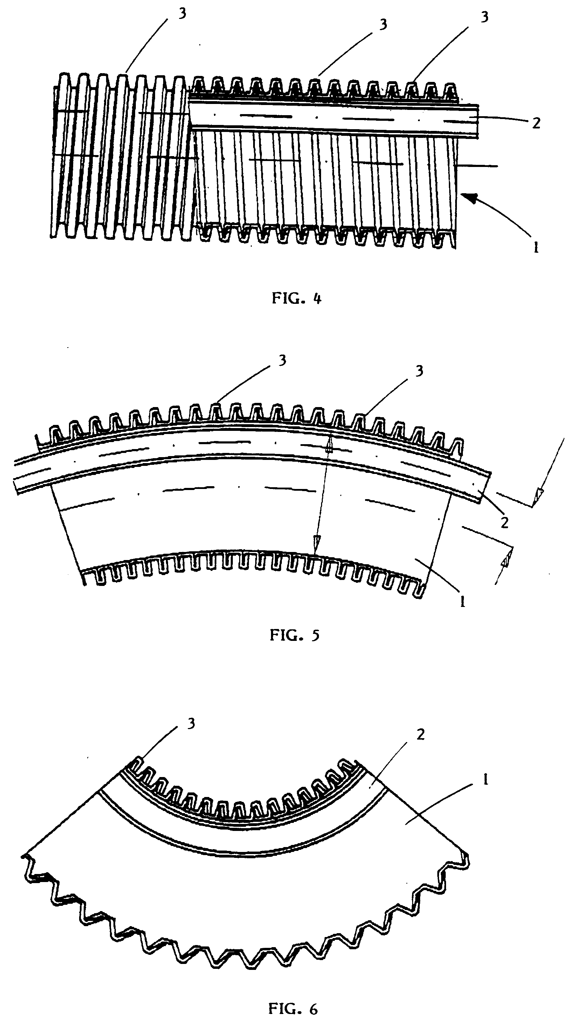

The same situation is clarified by the figures 5 and 6 from which it appears, upon a comparison with the structures according to figures 2 and 3, that the curvature radius of the hose 1 is considerably smaller when the auxiliary tube 2 is connected internally in the hose 1 to this hose by gluing or welding, than in the event wherein the same auxiliary tube 2 is applied along the outer side of the hose 1.

The auxiliary tube 2, which may serve for supplying a fluid or for housing an electrical wiring, is thereby also, as already mentioned earlier, better protected against damaging, but it are especially the mechanical properties of the hose 1 which are considerably improved as to elasticity and flexibility compared to those of a hose 1 which comprises an external auxiliary tube 2, as clarified by the figures 1 to 3 and 9.

The auxiliary tube 2 may extend in a straight line internally in the hose, i.e. parallel to the central axis of the hose, but might extend also spirally with respect to this longitudinal axis which further enhances the elasticity of the hose.

The auxiliary tube 2 may be either hollow or solid. A solid auxiliary tube may contain, for example, electrical conductors.

Such conductors 8 can be seen in figures 10 and 11. According to figure 10, the conductors 8 are embedded in the material, the auxiliary tube 9 consists of, and which is connected to the inner wall of the hose 1'' by means of an adhesive 10.

According to figure 11, the auxiliary tube 11 is formed by a mass of adhesive wherein the conductors 8 are taken up and which is directly attached to the inner wall of the hose 1'''.

The invention is not limited to the hereabove described embodiment and many modifications could be applied thereto without leaving the scope of the application. In this way, it is clear that two or more auxiliary tubes can be provided for enabling different fluids to circulate, either or not in addition to the already described electrical wirings.

## Claims

1. Flexible hose, the wall of which shows either or not spirally windings which form on the outer side of the hose either or not spirally grooves, characterized in that at least one auxiliary tube (2, 7, 9, 11) is connected along the inner wall of the flexible hose (1) to this inner wall.

2. Flexible hose according to claim 1, characterized in that aforesaid auxiliary tube (7, 9) is glued onto the inner wall of said hose (1).

3. Flexible hose according to claim 1, characterized in that aforesaid auxiliary tube (7, 9) is welded onto the inner wall of said hose.

4. Flexible hose according to one of the claims 1 - 3, characterized in that aforesaid auxiliary tube runs parallel to the central axis of the hose.

5. Flexible hose according to one of the claims 1 - 3, characterized in that aforesaid auxiliary tube extends spirally with respect to the central axis of the hose.

6. Flexible hose according to one of the claims 1 - 5, characterized in that aforesaid auxiliary tube (7, 9) is hollow.

7. Flexible hose according to one of the claims 1 - 5, characterized in that aforesaid auxiliary tube (9) is provided with conductors (8) which are embedded into the material of the auxiliary tube.

8. Flexible hose according to one of the claims 1, 4 and 5, characterized in that aforesaid auxiliary tube (11) is formed by an adhesive wherein conductors (8) are embedded, which adhesive is applied onto the inner wall of the hose (1''').
